# EUROPÄISCHE PATENTSCHRIFT

(11) **EP 4 161 742 B1**
(45) Veröffentlichungstag und Bekanntmachung des Hinweises auf die Patenterteilung: **27.08.2025**
(21) Anmeldenummer: 21730145.6
(22) Anmeldetag: 27.05.2021
(51) Int. Cl.: B25J 15/02, B25J 15/00, B25J 15/12, B25J 9/10, B25J 9/00

(54) **GREIFER MIT EINEM SEILZUGBETÄTIGUNGSMITTEL**
GRIPPER WITH A PULLING CORD ACTUATOR
PREHENSEUR AVEC UN ACTUATEUR TRACTEUR À CORDE

(30) Priorität: 04.06.2020 DE 102020207038
(43) Veröffentlichungstag der Anmeldung: 12.04.2023
(73) Patentinhaber: KUKA Deutschland GmbH, 86165 Augsburg (DE)
(72) Erfinder: RIEDEL, Martin, 86165 Augsburg (DE); SCHULTE-REBBELMUND, Till, 86152 Augsburg (DE)
(74) Vertreter: Oelke, Jochen
(86) Internationale Anmeldenummer: PCT/EP2021/064199
(87) Internationale Veröffentlichungsnummer: WO 2021/244940

(56) Entgegenhaltungen:
- DE-A1- 102005 054 514
- DE-A1- 102006 012 431
- DE-A1- 102009 017 503
- DE-B3- 102007 037 376
- FR-A1- 2 917 660

## Beschreibung

Die Erfindung betrifft einen Greifer, aufweisend einen Greifergrundkörper, wenigstens zwei Greiferfinger, von denen wenigstens einer an dem Greifergrundkörper verstellbar gelagert ist und einen am Greifergrundkörper angeordneten Antriebsmotor, der ausgebildet ist zum Bewegen des wenigstens einen an dem Greifergrundkörper verstellbar gelagerten Greiferfinger, wobei jeder an dem Greifergrundkörper verstellbar gelagerte Greiferfinger jeweils mittels wenigstens eines Zugmittels bewegt wird, in das eine Zugkraft durch den Antriebsmotor eingeleitet wird, um den Greifer durch Bewegen des wenigstens einen an dem Greifergrundkörper verstellbar gelagerten Greiferfingers wahlweise zu öffnen oder zu schließen.

Die DE 10 2006 009 559 B3 beschreibt eine Greifervorrichtung in der Art einer künstlichen Hand mit wenigstens zwei an einem Rahmen angebrachten Fingern, von denen zumindest ein Finger längs einer dem Finger zuordenbaren Bewegungsebene mittels eines Aktors aus einer langgestreckten in eine gekrümmte Fingerposition überführbar ist, wobei der Finger einstückig ausgebildet ist und eine Längserstreckung aufweist, längs der wenigstens ein Bereich vorgesehen ist, um den der Finger in der ihm zugeordneten Bewegungsebene krümmbar ist, wobei der wenigstens eine Bereich, um den der Finger in der ihm zugeordneten Bewegungsebene krümmbar ist, gelenkartig ausgebildet ist, dass längs des wenigstens einen aktorisch krümmbaren Fingers ein Zug- und Druckkräfte übertragendes, länglich ausgebildetes Stellelement mit zwei Stellelementenden vorgesehen ist, von denen ein Stellelementende mit einem dem Rahmen gegenüberliegenden Fingerspitzenbereich des Fingers und das andere Stellelementende mit dem Aktor einstückig verbunden sind.

DE102007037376B3 bezieht sich auf einen Aktor mit einem eine Welle in Rotation versetzenden Wellenantrieb, um dessen Welle wenigstens ein band- oder seilartiges Element auf- und/oder abwickelbar ist.

DE102006012431A1 offenbart einen Aktor mit einem eine Welle in Rotation versetzenden Wellenantrieb, um dessen Welle wenigstens ein band- oder seilartiges Element auf- und/oder abwickelbar ist, das über eine Seillänge verfügt und zwei Seilenden aufweist.

FR2917660A1 bezieht sich auf eine Klemme für Robotermanipulator mit verbesserter Klemmpräzision und Robotor.

DE102005054514A1 offenbart eine Vorrichtung zur Halterung von Gegenständen, insbesondere in Fahrzeugen, wobei die Vorrichtung ein den Gegenstand unmittelbar aufnehmendes Halteelement und eine Tragvorrichtung aufweist.

DE102009017503A1 offenbart einen Aktor mit einem Wellenantrieb, um dessen Welle wenigstens zwei Seile mit jeweils zwei Seilenden, in Abhängigkeit der Wellendrehrichtung auf- und abwickelbar sind.

Aufgabe der Erfindung ist es, einen Greifer mit wenigstens zwei Greiferfingern zu schaffen, der einen besonders zuverlässigen, kostengünstigen konstruktiven Aufbau aufweist.

Die Aufgabe wird prinzipiell erfindungsgemäß gelöst durch einen Greifer, aufweisend einen Greifergrundkörper, wenigstens zwei Greiferfinger, von denen wenigstens einer an dem Greifergrundkörper verstellbar gelagert ist, und einen am Greifergrundkörper angeordneten Antriebsmotor, der ausgebildet ist zum Bewegen des wenigstens einen an dem Greifergrundkörper verstellbar gelagerten Greiferfingers, wobei jeder an dem Greifergrundkörper verstellbar gelagerte Greiferfinger jeweils mittels wenigstens eines Zugmittels bewegt wird, in das eine Zugkraft durch den Antriebsmotor eingeleitet wird, um den Greifer durch Bewegen des wenigstens einen an dem Greifergrundkörper verstellbar gelagerten Greiferfingers wahlweise zu öffnen oder zu schließen, und aufweisend ein zentrales Seilzugbetätigungsmittel, das zwischen den wenigstens zwei Greiferfingern angeordnet ist und das ausgebildet ist, durch eine Antriebsbewegung des am Greifergrundkörper angeordneten Antriebsmotors das wenigstens eine Zugmittel in Schließrichtung des Greifers an das zentrale Seilzugbetätigungsmittel heranzuziehen, wobei die wenigstens zwei Greiferfinger jeweils eine kinematische Kette von mehreren aufeinander folgenden, gegeneinander verstellbar gelagerten Fingergliedern aufweisen, von denen jeweils ein in der kinematischen Kette distales Fingerglied ein Fingerspitzenglied bildet, wobei jeweils wenigstens ein Zugmittel sich entlang der kinematischen Kette der jeweiligen Fingerglieder längserstreckt, und das jeweilige Zugmittel mit dem jeweiligen Fingerspitzenglied verbunden ist, so dass bei Einleiten einer Zugkraft in das jeweilige Zugmittel der entsprechende Greiferfinger eine Schließbewegung ausführt und die Zugkraft ein Krümmen der kinematischen Kette der Fingerglieder bewirkt, wobei der Greifergrundkörper eine Aufnahmetasche aufweist, in welcher der Antriebsmotor angeordnet ist, und jeder der wenigstens zwei Greiferfinger mittels jeweils eines Festkörper-Viergelenks verstellbar an dem Greifergrundkörper gelagert ist, derart, dass durch die von dem Antriebsmotor verursachten, über das Seilzugbetätigungsmittel in die Zugmittel eingeleiteten Zugkräfte die beiden Greiferfinger aneinander angenähert, insbesondere aufeinander zu bewegt werden, um den Greifer zu schließen und, wobei der Greifergrundkörper zusammen mit den wenigstens zwei Greiferfingern, den wenigstens zwei Festkörper-Viergelenken und der Aufnahmetasche für den Antriebsmotor, als ein einteiliger Formkörper mit federelastischen Gelenkverbindungen ausgebildet ist.

In einer einfachen Ausgestaltung kann der Greifer demgemäß beispielsweise einen an dem Greifergrundkörper verstellbar gelagerten ersten Greiferfinger aufweisen und einen an dem Greifergrundkörper starr befestigten zweiten Greiferfinger aufweisen. Der insoweit einzige bewegliche erste Greiferfinger wirkt mit dem insoweit einzigen starren zweiten Greiferfinger so zusammen, dass alleine durch eine Bewegung des verstellbar gelagerten ersten Greiferfingers der Greifer geöffnet und geschlossen werden kann. Dies erfolgt, indem der verstellbar gelagerte erste Greiferfinger zum Schließen des Greifers auf den starr befestigten zweiten Greiferfinger zubewegt wird und zum Öffnen des Greifers von dem starr befestigten zweiten Greiferfinger wegbewegt wird.

Der Greifer kann in verschiedenen Abwandlungen zwei oder mehr Paare von einem an dem Greifergrundkörper verstellbar gelagerten ersten Greiferfinger und einem an dem Greifergrundkörper starr befestigten zweiten Greiferfinger aufweisen. Der an dem Greifergrundkörper starr befestigte zweite Greiferfinger kann insofern eine einfache Gegenhaltung zu dem an dem Greifergrundkörper verstellbar gelagerten ersten Greiferfinger darstellen.

In einer bevorzugten Weiterentwicklung kann der Greifer wenigstens zwei an dem Greifergrundkörper verstellbar gelagerte Greiferfinger aufweisen und das zentrale Seilzugbetätigungsmittel kann dabei zwischen den wenigstens zwei an dem Greifergrundkörper verstellbar gelagerten Greiferfingern angeordnet sein, wobei das zentrale Seilzugbetätigungsmittel ausgebildet ist, durch eine Antriebsbewegung des am Greifergrundkörper angeordneten Antriebsmotors das wenigstens eine Zugmittel des einen Greiferfingers in Schließrichtung des Greifers von einer Seite ausgehend an das zentrale Seilzugbetätigungsmittel heranzuziehen und gleichzeitig das wenigstens eine andere Zugmittel des anderen Greiferfingers in Schließrichtung des Greifers von der anderen Seite ausgehend an das zentrale Seilzugbetätigungsmittel heranzuziehen.

In einer solchen Weiterentwicklung des Greifers ist demgemäß wenigstens ein an dem Greifergrundkörper verstellbar gelagerter erster Greiferfinger vorgesehen, der über wenigstens ein erstes Zugmittel mittels des zentrale Seilzugbetätigungsmittels bewegt wird, und wenigstens ein an dem Greifergrundkörper verstellbar gelagerter zweiter Greiferfinger vorgesehen, der über wenigstens ein zweites Zugmittel insbesondere mittels desselben zentralen Seilzugbetätigungsmittels bewegt wird.

Der Greifer kann in verschiedenen Abwandlungen zwei oder mehr Paare von an dem Greifergrundkörper verstellbar gelagerten ersten Greiferfingern und an dem Greifergrundkörper verstellbar gelagerten zweiten Greiferfingern aufweisen. Jeweils ein verstellbarer erster Greiferfinger wirkt insoweit mit jeweils einem verstellbaren zweiten Greiferfinger ein Paar bildend zusammen, die gegeneinander verstellbar sind und dadurch der Greifer geöffnet bzw. geschlossen werden kann.

Im Speziellen wird die Aufgabe gelöst durch einen Greifer, aufweisend einen Greifergrundkörper, wenigstens zwei Greiferfinger, die an dem Greifergrundkörper jeweils verstellbar gelagert sind und einen am Greifergrundkörper angeordneten Antriebsmotor, der ausgebildet ist zum Bewegen der wenigstens zwei Greiferfinger, wobei die wenigstens zwei Greiferfinger jeweils mittels wenigstens eines Zugmittels bewegt werden, in das eine Zugkraft durch den Antriebsmotor eingeleitet wird, um den Greifer durch Bewegen der wenigstens zwei Greiferfinger wahlweise zu öffnen oder zu schließen, und aufweisend ein zentrales Seilzugbetätigungsmittel, das zwischen den wenigstens zwei Greiferfingern angeordnet ist und das ausgebildet ist, durch eine Antriebsbewegung des am Greifergrundkörper angeordneten Antriebsmotors das wenigstens eine Zugmittel des einen Greiferfingers in Schließrichtung des Greifers von einer Seite ausgehend an das zentrale Seilzugbetätigungsmittel heranzuziehen und gleichzeitig das wenigstens eine Zugmittel des anderen Greiferfingers in Schließrichtung des Greifers von der anderen Seite ausgehend an das zentrale Seilzugbetätigungsmittel heranzuziehen.

Der Greifer ist ein robotischer Greifer, d.h. er kann ausgebildet sein, beispielsweise durch einen Roboterarm automatisch im Raum bewegt und betätigt, d.h. geöffnet und geschlossen zu werden.

Der Greifer kann, je nach Anwendung, beispielsweise paarweise in Art eines Zangengreifers konfiguriert sein, oder ähnlich einer anthropomorphen Greiferhand mit mehr als zwei Greiferfingern, insbesondere in paarweise gegenüberliegender Anordnung von jeweils zwei Greiferfingern, konfiguriert sein.

Demgemäß können zwei oder mehrere Greiferfinger als Komponenten des Greifers verwendet werden. Der Greifer kann insbesondere bei teil- oder vollautomatisierten robotischen Greifaufgaben eingesetzt werden. Insofern kann der Greifer, der zwei oder mehrere Greiferfinger, insbesondere paarweise aufweist, ein Greifwerkzeug bilden, das von einem Roboterarm in einem Handfahrbetrieb oder programmgesteuert automatisch gehandhabt, insbesondere bewegt und betätigt werden kann. Der Greifer kann insbesondere programmgesteuert automatisch geöffnet und geschlossen werden. Der Greifer kann aber auch eine beliebige Anzahl von Greiferfingern aufweisen, die dann beispielsweise über einen Kreisumfang gleichmäßig verteilt angeordnet sind und sich bei einer Schließbewegung mit ihren Fingerspitzen auf einen gemeinsamen zentralen Punkt hinbewegen. Dieser zentrale Punkt liegt dann auf einer Symmetriegeraden des Greifers, wobei durch diesen Punkt dann auch die Mittenachse des Seilzugbetätigungsmittels bzw. die Drehachse einer Welle des Seilzugbetätigungsmittels läuft.

Der Greifergrundkörper bildet eine Basis, an welcher die wenigstens zwei oder die mehreren Greiferfinger gelagert bzw. befestigt sind. Der Greifergrundkörper kann insoweit eine Handwurzel bilden, an welcher die zwei oder mehreren Greiferfinger je nachdem beweglich oder starr angeordnet sind, wobei der Greifergrundkörper an einem Werkzeugflansch eines Roboterarms oder eines analogen Handhabungsgerätes befestigt werden kann.

Die Fingerglieder des Greiferfingers können starre Einzelglieder sein, analog den Fingergelenken einer Hand eines Menschen. Diese Fingerglieder sind über Gelenke miteinander verbunden. Zur Bildung eines antropomorphen Fingers können die Fingerglieder seriell nacheinander angeordnet verbunden sein, so dass sich stets ein starres Fingerglied und ein bewegliches Fingergelenk abwechseln. Die mehreren Fingerglieder und die mehreren Fingergelenke bilden demgemäß eine kinematische Kette von mehreren aufeinander folgenden, gegeneinander verstellbar gelagerten Fingergliedern. Jeder Greiferfinger kann prinzipiell eine weitgehend beliebige Anzahl von Fingergliedern und Fingergelenken aufweisen. Eine in den meisten allgemeinen Fällen sinnvolle Anzahl von Fingergliedern kann beispielsweise zwischen drei Fingergliedern und zwölf Fingergliedern liegen.

Alternativ können die Greiferfinger beispielsweise auch als sogenannte Fin-Ray-Greifer ausgebildet sein. Ein Fin-Ray-Greifer hat die Eigenschaft einer auf ihn einwirkenden Kraft nicht auszuweichen, sondern sich der einwirkenden Kraft entgegen zu biegen bzw. entgegen zu krümmen. Dazu ist jeweils eine dem zu greifenden Objekt zugewandte Greiferfingerwand und eine dem zu greifenden Objekt abgewandte Greiferfingerwand jeweils flexibel ausgebildet. Die zugewandte Greiferfingerwand und die abgewandte Greiferfingerwand sind spitzwinkelig zueinander ausgerichtet. Zwischen der zugewandten Greiferfingerwand und der abgewandte Greiferfingerwand sind mehrere, voneinander beabstandete starre Querstreben angeordnet, die mit ihren beiden Enden gelenkig an den Innenseiten der zugewandten Greiferfingerwand und der abgewandten Greiferfingerwand angebunden sind.

Aufgrund der zentralen Anordnung des Seilzugbetätigungsmittels innerhalb des Greifers ergibt sich eine symmetrische Anordnung zu den Greiferfingern, insbesondere auch der Zugmittel der Greiferfinger. Im Falle von beispielsweise zwei verstellbar gelagerten Greiferfingern läuft das eine Zugmittel in einer ersten Richtung zu dem einen Greiferfinger und das andere Zugmittel läuft in einer zur ersten Richtung entgegengesetzten zweiten Richtung zu dem anderen Greiferfinger. Das Seilzugbetätigungsmittel bewirkt also entgegengesetzte Zugkräfte, welche die beiden gegenüberliegenden Greiferfinger aufeinander zu bewegen, um den Greifer zu schließen. In einer anderen beispielhaften Ausführungsvariante können zwei Paare von Greiferfingern vorgesehen sein, also insgesamt vier Greiferfinger vorgesehen sein, die jeweils um 90 Grad voneinander versetzt um das zentrale Seilzugbetätigungsmittel herum am Greifergrundkörper angeordnet sind. In weiteren Ausführungsvarianten ist aber auch eine ungerade Anzahl von Greiferfingern möglich, wie beispielsweise drei oder fünf Greiferfinger, die dementsprechend beispielsweise um jeweils 120 Grad (bei drei Greiferfingern) voneinander versetzt um das zentrale Seilzugbetätigungsmittel herum am Greifergrundkörper angeordnet sind oder um jeweils 72 Grad (bei drei Greiferfingern) voneinander versetzt um das zentrale Seilzugbetätigungsmittel herum am Greifergrundkörper angeordnet sind.

Das Seilzugbetätigungsmittel stellt also sicher, dass jedes Zugmittel jeden Greiferfingers zu einer gemeinsamen zentralen Stelle hin zusammengezogen werden. So kann beispielsweise in einer sehr einfachen Ausführungsvariante das Seilzugbetätigungsmittel bereits von einem bloßen zentralen Rohr gebildet werden, an dessen freiem stirnseitigen Rohrende die Zugmittel in das Rohr hineinlaufen und innerhalb des Rohres axial nach unten in Richtung des Greifergrundkörpers gezogen werden, beispielsweise angetrieben durch den Antriebsmotor. In einer anderen Ausführungsvariante können die mehreren Zugmittel über Umlenkrollen aus ihren radialen Ausrichtungen in eine gemeinsame axiale Ausrichtung umgelenkt und dann zusammengeführt werden, um einen gemeinsamen Strang zu bilden, an dem in einer axialen Richtung nach unten in Richtung des Greifergrundkörpers gezogen werden kann, um die Greiferfinger aufeinander zu, in Richtung eines zentralen Punktes hin zu bewegen, und damit den Greifer zu schließen.

Die wenigstens zwei Greiferfinger weisen jeweils eine kinematische Kette von mehreren aufeinander folgenden, gegeneinander verstellbar gelagerten Fingergliedern auf, von denen jeweils ein in der kinematischen Kette distales Fingerglied ein Fingerspitzenglied bildet, wobei jeweils wenigstens ein Zugmittel sich entlang der kinematischen Kette der jeweiligen Fingerglieder längserstreckt, und das jeweilige Zugmittel mit dem jeweiligen Fingerspitzenglied verbunden ist, so dass bei Einleiten einer Zugkraft in das jeweilige Zugmittel der entsprechende Greiferfinger eine Schließbewegung ausführt und die Zugkraft ein Krümmen der kinematischen Kette der Fingerglieder bewirkt.

Das jeweilige Zugmittel, das mit dem jeweiligen Fingerspitzenglied verbunden ist, ist nicht nur dazu ausgebildet, den jeweiligen Greiferfinger in einem ersten Schritt mittels des Seilzugbetätigungsmittels durch Ziehen an dem Zugmittel zu schließen, sondern ist auch dazu ausgebildet, in einem zweiten Schritt die kinematische Kette der Fingerglieder durch Ziehen an dem Zugmittel zu krümmen. In einer speziellen Weiterbildung kann zusätzlich sogar vorgesehen sein, dass das Zugmittel außerdem dazu ausgebildet ist, in einem dritten Schritt durch eine einschwenkende Zugbewegung zumindest das Fingerspitzenglied gegen das zu greifende Objekt zu spannen.

Mittels einer solchen Lösung kann also durch ein einziges Ziehen an dem jeweiligen Zugmittel des jeweiligen Greiferfingers der Greiferfinger zunächst in einem ersten Schritt an das zu greifende Objekt bis zu einer Berührung des Greiferfingers mit dem Objekt herangeführt werden. Anschließend kann durch weiteres Ziehen an dem Zugmittel in dieselbe Zugrichtung in einem zweiten Schritt der Greiferfinger sich krümmen, so dass sich mehrere mediale Glieder des Greiferfingers, insbesondere nacheinander, an das Objekt anlegen können. Abschließend kann optional gegebenenfalls durch weiteres Ziehen an dem Zugmittel in dieselbe Zugrichtung in einem dritten Schritt zumindest das Fingerspitzenglied gegen das Objekt gespannt oder gekippt werden. Mit einem einzigen Zugmittel je Greiferfinger kann also eine sehr komplexe Schließbewegung ausgeführt werden. Das einzige Zugmittel je Greiferfinger kann dabei ein einzelnes Seil, mehrere Einzelseile oder ein Bündel von zusammengefassten Einzelseilen sein.

Das Seilzugbetätigungsmittel kann eine zentral zwischen der einen Greifseite des einen Greiferfingers und der anderen Greifseite des anderen Greiferfingers angeordnete, sich parallel zu den Greifseiten längserstreckende, drehbar am Greifergrundkörper gelagerte Welle umfassen, die eine Mantelwand aufweist, die ausgebildet ist zum Aufwickeln wenigstens des Zugmittels des an dem Greifergrundkörper verstellbar gelagerten einen Greiferfingers, wenn sich die Welle in einer Aufwickelrichtung dreht. Das Seilzugbetätigungsmittel kann alternativ auch eine zentral zwischen der einen Greifseite des einen Greiferfingers und der anderen Greifseite des anderen Greiferfingers angeordnete, sich parallel zu den Greifseiten längserstreckende, drehbar am Greifergrundkörper gelagerte Welle umfassen, die eine Mantelwand aufweist, die ausgebildet ist zum gleichzeitigen Aufwickeln der Zugmittel der wenigstens zwei Greiferfinger, wenn sich die Welle in einer Aufwickelrichtung dreht. Die Mantelwand der Welle ist in diesem Fall somit ausgebildet, zum gleichzeitigen Aufwickeln der mehreren Zugmittel der wenigstens zwei Greiferfinger, wenn sich die Welle in einer Aufwickelrichtung dreht. Die Anzahl der mehreren Zugmittel kann insoweit der Anzahl der verstellbar gelagerten Greiferfinger entsprechen bzw. ein entsprechendes Vielfaches davon sein, beispielsweise, wenn jeder verstellbar gelagerte Greiferfinger von zwei Zugmitteln betätigt wird.

Die Welle kann beispielsweise in dem Greifergrundkörper drehbar gelagert sein und sich demgemäß mit ihrer Drehachse entlang der Symmetrieachse des Greifers erstrecken. Die in dem Greifergrundkörper drehbar gelagerte Welle kann dann über einen weitgehend beliebig am Greifergrundkörper angeordneten Antriebsmotor angekoppelt sein. Alternativ kann der Antriebsmotor derart in dem Greifergrundkörper angeordnet sein, dass seine Motorwelle sich mit seiner Drehachse entlang der Symmetrieachse des Greifers erstreckt. Die Welle kann in einer solchen Ausführungsart dann direkt auf die Motorwelle aufgesteckt sein, sich also in Verlängerung der Motorwelle wegerstrecken. Gegebenenfalls kann die Welle auch einteilig mit der Motorwelle ausgebildet sein, bzw. die Motorwelle des Antriebsmotors unmittelbar als das Seilzugbetätigungsmittel genutzt werden.

Die Mantelwand der Welle, die ausgebildet ist zum gleichzeitigen Aufwickeln der Zugmittel der wenigstens zwei Greiferfinger, wenn sich die Welle in einer Aufwickelrichtung dreht, bildet insoweit eine Art von Seilwinde, auf der sich die Zugmittel aufwickeln, wodurch die freien Längen der an die Greiferfinger hingeführten Zugmittelabschnitte (Seilabschnitte) sich verkürzen und die Greiferfinger somit gleichzeitig aufeinander zu bewegt werden, so dass sich der Greifer schließt. Das jeweilige Zugmittel ist ausgebildet, zumindest Zugkräfte zu übertragen. Insoweit kann das jeweilige Zugmittel beispielsweise durch Seile, Kabel, Drähte oder Schnüre gebildet werden.

Die drehbar am Greifergrundkörper gelagerte Welle kann eine taillierte Mantelwand mit in axialer Richtung sich änderndem Mantelwandradius aufweisen.

Aufgrund einer Taillierung der Welle ändern sich der wirksame Durchmesser der Welle bzw. der wirksame Radius, um den sich die Zugmittel um die Welle Wickeln. In Folge der Änderung des Durchmessers bzw. des Radius ändert sich bei gleichbleibender Drehgeschwindigkeit des Antriebsmotors bzw. der Welle die Schließgeschwindigkeit der Greiferfinger. Wenn das Antriebsmoment konstant bleibt, dann ändert sich außerdem die Zugkraft an den Zugmitteln, so dass sich die Schließkraft des Greifers in Abhängigkeit seiner Schließstellung ändern kann. Je nach geometrischer Auslegung der Taillierung der Welle kann also konstruktiv Einfluss genommen werden, auf die Schließgeschwindigkeit der Greiferfinger und/oder die Schließkraft des Greifers.

Das Seilzugbetätigungsmittel, insbesondere die drehbar am Greifergrundkörper gelagerte Welle, kann eine Wellendurchgangsbohrung aufweisen, durch welche ein Seilzug in Seilzugrichtung hindurchgeführt ist, insbesondere verschiebbar hindurchgeführt ist, wobei der Seilzug zur Betätigung eines Paares von zwei gegenüberliegend angeordneten, an dem Greifergrundkörper verstellbar gelagerten Greiferfingern ausgebildet ist, indem das eine Ende des Seilzugs mit dem einen Greiferfinger verbunden ist und das andere Ende des Seilzugs mit dem anderen Greiferfinger verbunden ist.

Indem der Seilzug mittels der Wellendurchgangsbohrung geführt und insoweit festgelegt ist, sind keine gesonderten Befestigungsmittel erforderlich, um den Seilzug an der Welle festzulegen. Eine starre Verbindung des Seilzugs an der Welle soll sogar möglichst verhindert werden, damit der Seilzug gestreckt durch die Wellendurchgangsbohrung laufen kann, ohne dass der Seilzug in dieser vollständig geöffneten Stellung der Greiferfinger die Mantelwand der Welle umwickelt, und zwar dann, wenn die Greiferfinger vollständig geöffnet sind. In diesem Zustand kann sich der Seilzug dann relativ zur Welle bewegen, d.h. verschieben und sich wieder selbsttätig mittig ausrichten, falls unerwünschte Nebeneffekte, beispielsweise aufgrund unsymmetrisch wirkender Reibungseffekte, dazu führten, dass die Greiferfinger unterschiedlich betätigt wurden, d.h. die Zugmittel unterschiedlich aufgewickelt wurden.

Die Wellendurchgangsbohrung zur Mantelwand des Seilzugbetätigungsmittels oder zur Mantelwand der Welle kann mit einer randoffenen Aussparung ausgebildet sein, so dass ein Mittenabschnitt des Seilzugs in einer radialen Zuführungsrichtung von außerhalb der Mantelwand in die Wellendurchgangsbohrung eingehängt werden kann.

Aufgrund der Aussparung kann der Seilzug an einem Mittenabschnitt einfach in die Wellendurchgangsbohrung eingehängt werden, ohne dass der Seilzug mit einem seiner Endabschnitte durch die Wellendurchgangsbohrung hindurchgefädelt werden müsste. Eine solche Ausführung mit randoffener Aussparung kann besonders dann zweckmäßig sein, wenn die Greiferfinger von dem Greifergrundkörper lösbar sind, beispielsweise um eine Austauschbarkeit zu ermöglichen und/oder einen Wechsel andersartiger Greiferfinger zu ermöglichen, und der Seilzug eine Komponente der jeweiligen Greiferfinger ist und deshalb der Seilzug zusammen mit den Greiferfingern gewechselt werden muss.

Das eine Zugmittel kann an einer ersten Anlenkungsstelle an dem einen Greiferfinger angekoppelt sein und das andere Zugmittel kann dabei an einer zweiten Anlenkungsstelle an dem anderen Greiferfinger angekoppelt sein, derart, dass die beiden Anlenkungsstellen auf gleicher Höhe liegen, wobei die Zugmittel an dem Seilzugbetätigungsmittel auf einer Höhe angebunden sind, welche näher an dem Greifergrundkörper liegt, als die erste Anlenkungsstelle und die zweite Anlenkungsstelle.

Der Antriebsmotor kann in einer am Greifergrundkörper ausgebildeten Aufnahmetasche angeordnet sein, derart, dass sich im aufgenommenen Zustand des Antriebsmotors in der Aufnahmetasche, die Motorwelle des Antriebsmotors zentral entlang einer Symmetrieachse des Greifers aus dem Greifergrundkörper heraus in Richtung des Greifspaltes des Greifers erstreckt.

Die Aufnahmetasche kann einteilig in dem Greifergrundkörper ausgebildet sein. Die Aufnahmetasche kann eine Tascheninnenwand aufweisen, die an eine Außenmantelwand des Antriebsmotors derart angepasst ist, dass der Antriebsmotor zumindest weitgehend formpassgenau in die Aufnahmetasche eingefügt werden kann. Die Aufnahmetasche kann so gestaltet sein, dass der Antriebsmotor in einer axialen Richtung, d.h. in Richtung der Drehachse der Motorwelle des Antriebsmotors in die Aufnahmetasche eingeschoben werden kann. Die Aufnahmetasche kann eine Öffnung aufweisen, durch welche die Motorwelle oder eine an die Motorwelle angeschlossene Welle, die den Seilzug aufwickelt, hindurchragt.

Der Greifergrundkörper weist eine Aufnahmetasche auf, in welcher der Antriebsmotor angeordnet ist, und jeder der wenigstens zwei Greiferfinger ist dabei mittels jeweils eines Festkörper-Viergelenks verstellbar an dem Greifergrundkörper gelagert, derart, dass durch die von dem Antriebsmotor verursachten, über das Seilzugbetätigungsmittel in die Zugmittel eingeleiteten Zugkräfte die beiden Greiferfinger aneinander angenähert, insbesondere aufeinander zu bewegt werden, um den Greifer zu schließen.

Das Festkörper-Viergelenk kann eine geringere Steifigkeit aufweisen, als die Steifigkeit von formadaptiven Greiferfingern, die je nach Ausführungsform an dem Greifergrundkörper gelagert oder befestigt sein können.

Das jeweilige Zugmittel eines jeweiligen formadaptiven Greiferfingers kann je nach Ausführungsform nicht nur dazu dienen, die beiden Greiferfinger zum Schließen des Greifers gegeneinander zu bewegen, sondern kann auch dazu dienen, den jeweiligen Greiferfinger zu krümmen, indem das jeweilige Zugmittel an zugeordneten Umlenkmitteln je Greiferfinger, wie beispielsweise Umlenkstäben oder Umlenkrollen, beispielsweise um 90 Grad umgelenkt werden und entlang der Längserstreckung der Greiferfinger bis zu dem jeweiligen Fingerspitzenglied geführt und erst dort festgelegt ist. Das Umlenkmittel, insbesondere die Umlenkstäbe oder Umlenkrollen können eine erhöhte Reibkraft auf das jeweilige Zugmittel ausüben, so dass sichergestellt wird, dass bei einem Ziehen an den Zugmitteln zuerst die Greiferfinger aufeinander zu bewegt werden, d.h. der Greifer geschlossen wird, beispielsweise durch eine Gelenkbeweglichkeit mittels Festkörper-Viergelenke einer geringeren Steifigkeit, und erst anschließend aufgrund weiteren Ziehens an den Zugmitteln die formadaptiven Greiferfinger gekrümmt werden.

Der Greifergrundkörper ist zusammen mit den wenigstens zwei Greiferfingern, den wenigstens zwei Festkörper-Viergelenken und der Aufnahmetasche für den Antriebsmotor, als ein einteiliger Formkörper mit federelastischen Gelenkverbindungen ausgebildet.

Die Erfindung beschreibt einerseits einen einfachen Aufbau eines seilbasierten Antriebs und anderseits eine besondere monolithische, d.h. einteilig hergestellte Struktur des kompletten Greifers. Dabei kann insbesondere die Fingerführungskinematik und ein adaptiver Fingerbereich des jeweiligen Greiferfingers speziell daran angepasst ausgebildet sein.

Die gesamte Greiferstruktur, inklusive einem adaptiven Fingerbereich, einem Fingerführungsbereich der Kinematik, einem Greiferbefestigungsbereich als Schnittstelle zu einem Roboter und/der die Antriebshalterung kann prinzipiell aus einem einzigen Bauteil bestehen, welches beispielsweise in einem additiven Fertigungsverfahren oder in einem Gießverfahren, insbesondere im Spritzgussverfahren, hergestellt werden kann.

In den möglichen Ausführungsformen kann die Struktur des Greifers eine im Wesentlichen ebene, in die Tiefe extrudierte Form aufweisen, die einfach und ohne Hinterschnitt und Schieber beispielsweise im Spritzgussverfahren herstellbar ist. Einzige Ausnahme in der Entformungsrichtung stellt gegebenenfalls die Motorhalterung dar, die jedoch in einer anderen Ausführungsvariante auch seitlich offen gestaltet werden kann.

Neben einem monolithischen Aufbau ist auch ein quasimonolithischer Aufbau denkbar, bei dem der beschriebene Aufbau an einer oder mehreren Stellen, insbesondere an starren Stellen, aus fertigungstechnischen Gründen und oder aus Service- und Austauschbarkeitsgründen zusammengesteckt aufgebaut wird.

Die Greiferstruktur kann aus einer Kombination aus elastischen und starren Bereichen bestehen, die dem Greifer die gewünschte Beweglichkeit und Funktionen geben. Die unterschiedlichen Nachgiebigkeiten können beispielsweise durch eine unterschiede Materialkombination, wie beispielsweise ein Zwei-Komponenten-Spitzguss, erzeugt werden oder durch unterschiedliche Flächenträgheitsmomente umgesetzt werden.

Neben einer einteiligen Struktur besteht der Greifer dann in einem solchen Fall nur noch aus dem Antriebsstrang, der sich aus einem einfachen Motor, insbesondere mit einem Positionsgeber, einer Antriebswelle und einem Seil zusammensetzt.

Die Antriebswelle kann dabei beispielsweise koaxial auf der Motorwelle befestigt, insbesondere geklemmt, gepresst oder verklebt werden, und dient zum Aufwickeln des Zugseils bzw. der Zugseile. Ein symmetrischer Aufbau ermöglicht den Verzicht auf ein zusätzliches radiales Stützlager, da sich die Seilkräfte beim Greifen stets aufheben und kein resultierendes Kippmoment auf die Welle entsteht.

Die Antriebswelle kann einen Mitnehmer aufweisen, der das Zugseil bei Drehung der Welle um diese wickelt. Der Mitnehmer kann dabei beispielsweise als durchgängige Bohrung bzw. Öse ausgeführt sein, sodass das durchgängige Seil in einem entspannten bzw. teilentspannten Zustand bei geöffnetem Greifer verrutschen kann und sich der Greifer somit bei jedem Öffnen selbst wieder ausrichtet, insbesondere zentriert. Hierzu kann es erforderlich sein, dass das Seil im geöffneten Zustand keine oder nur wenig Umschlingung aufweist und leicht durch die Öse rutschen kann.

Die Öse kann je nach Ausprägung geschlossen oder offen gestaltet sein, wodurch sich unterschiedliche Montagemöglichkeiten des Zugseils und unterschiedliche Festigkeiten der Welle ergeben. Die Öse kann aus Gründen eines besseren Aufwickelverhaltens leicht proximal zur Seillinie bzw. zur Seilführung versetzt angeordnet sein.

Auf Höhe der Seilführung kann die Mantelfläche der Welle als Seilwickelfläche zur besseren Seilführung und zur Erhöhung der Seilkraft durch kleinere Wickelradien, tailliert ausgeführt sein.

Damit der Greifvorgang besonders erfolgreich ausgeführt werden kann, sollte die Bewegungsreihenfolge sichergestellt werden, indem zunächst die gestreckten Greiferfinger zusammenfahren, d.h. aufeinander zu gezogen werden, bei einem Kontakt der Greiferfinger mit dem zu greifenden Objekt sich die Greiferfinger krümmend um das Objekt legen.

Dies kann beispielsweise gewährleistet werden, indem die Steifigkeit des formadaptiven Fingers höher als die Steifigkeit der Fingerführung ist, also die Bewegung erst in der Kinematik stattfindet und/oder das Zugseil über ein reibungsbehaftetes Element, insbesondere einen Stift in den Fingern umgelenkt wird, und die Reibkraft fingerschließend, aber nicht fingerkrümmend wirkt.

Konkrete Ausführungsbeispiele der Erfindung sind in der nachfolgenden Beschreibung unter Bezugnahme auf die beigefügten Figuren näher erläutert. Die Erfindung ist durch die Patentansprüche bestimmt.

Es zeigen:
- Fig. 1: eine perspektivische Darstellung einer ersten beispielhaften Ausführungsform eines Greifers mit einem erfindungsgemäßen zentralen Seilzugbetätigungsmittel, wobei die Greiferfinger als Fin-Ray-Greiferfinger ausgebildet sind,
- Fig. 2: eine vergrößerte perspektivische Teildarstellung des zentralen Seilzugbetätigungsmittel gemäß Fig. 1,
- Fig. 3: eine perspektivische Darstellung einer zweiten beispielhaften Ausführungsform eines Greifers mit einem erfindungsgemäßen zentralen Seilzugbetätigungsmittel, wobei die Greiferfinger als kinematische Kette mehrere Glieder und Gelenke ausgebildet sind, die mittels Seilzug krümmbar sind, und
- Fig. 4: eine vergrößerte perspektivische Teildarstellung des zentralen Seilzugbetätigungsmittel gemäß Fig. 3.

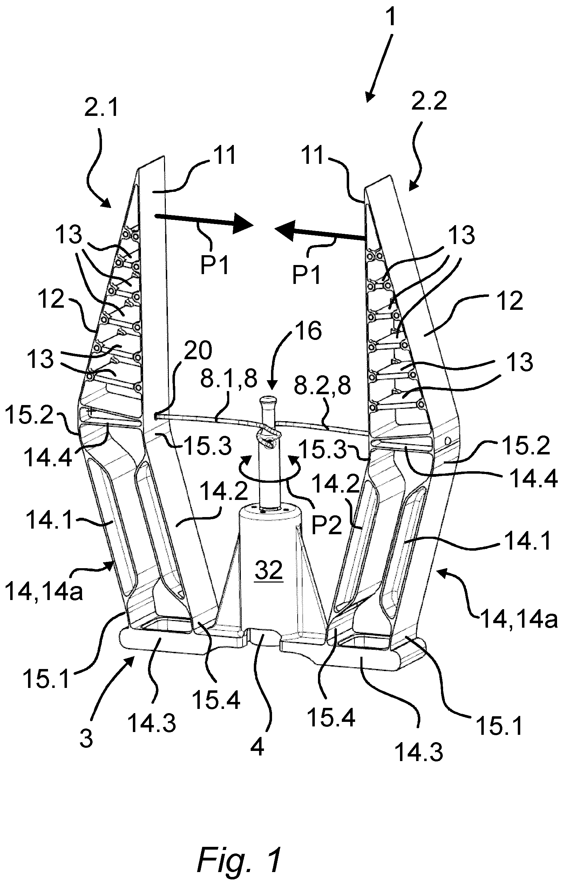

In der Fig. 1 ist eine beispielhafte erste Ausführungsform eines Greifers 1 dargestellt.

Der Greifer 1 weist einen Greifergrundkörper 3 und im Falle des vorliegenden Ausführungsbeispiel ein Paar, d.h. zwei Greiferfinger 2.1, 2.2 auf, die an dem Greifergrundkörper 3 jeweils verstellbar gelagert sind. Die beiden Greiferfinger 2.1, 2.2 sind beispielsweise als sogenannte Fin-Ray-Greifer ausgebildet. Ein Fin-Ray-Greifer hat die Eigenschaft einer auf ihn einwirkenden Kraft nicht auszuweichen, sondern sich der einwirkenden Kraft entgegen zu biegen bzw. entgegen zu krümmen. Dazu ist jeweils eine dem zu greifenden Objekt zugewandte Greiferfingerwand 11 und eine dem zu greifenden Objekt abgewandte Greiferfingerwand 12 jeweils flexibel ausgebildet. Die zugewandte Greiferfingerwand 11 und die abgewandte Greiferfingerwand 12 sind spitzwinkelig zueinander ausgerichtet. Zwischen der zugewandten Greiferfingerwand 11 und der abgewandte Greiferfingerwand 12 sind mehrere, voneinander beabstandete starre Querstreben 13 angeordnet, die mit ihren beiden Enden gelenkig an den Innenseiten der zugewandten Greiferfingerwand 11 und der abgewandten Greiferfingerwand 12 angebunden sind.

Die verstellbare Lagerung der zwei Greiferfinger 2.1, 2.2 an dem Greifergrundkörper 3 erfolgt im Falle des vorliegenden Ausführungsbeispiels jeweils mittels eines Parallelogramm-Viergelenks 14. Das Parallelogramm-Viergelenk 14 umfasst zwei parallel zueinander angeordnete lange Stäbe 14.1, 14.2 und zwei parallel zueinander angeordnete kurze Stäbe 14.3, 14.4, die jeweils durch ein Drehgelenk bzw. Schwenkgelenk 15.1, 15.2, 15.3, 15.4 verbunden sind. Im Falle des vorliegenden Ausführungsbeispiels sind die Stäbe 14.1, 14.2, 14.3, 14.4 und die Schwenkgelenke 15.1, 15.2, 15.3, 15.4 als ein einteiliges Formteil ausgebildet.

Der Greifer 1 weist einen am Greifergrundkörper 3 angeordneten Antriebsmotor 4 auf, der ausgebildet ist zum Bewegen der wenigstens zwei Greiferfinger 2.1, 2.2, wobei die wenigstens zwei Greiferfinger 2.1, 2.2 jeweils mittels wenigstens eines Zugmittels 8.1, 8.2 bewegt werden. In das jeweilige Zugmittel 8.1, 8.2 kann eine Zugkraft durch den Antriebsmotor 4 eingeleitet werden, um den Greifer 1 durch Bewegen der wenigstens zwei Greiferfinger 2.1, 2.2 wahlweise zu öffnen oder zu schließen (Pfeile P1).

Der Greifer 1 weist erfindungsgemäß ein zentrales Seilzugbetätigungsmittel 16 auf, das zwischen den wenigstens zwei Greiferfingern 2.1, 2.2 angeordnet ist und das ausgebildet ist, durch eine Antriebsbewegung des am Greifergrundkörper 3 angeordneten Antriebsmotors 4 das wenigstens eine Zugmittel 8.1 des einen Greiferfingers 2.1 in Schließrichtung (Pfeil P1) des Greifers 1 von einer Seite ausgehend an das zentrale Seilzugbetätigungsmittel 16 heranzuziehen und gleichzeitig das wenigstens eine Zugmittel 8.2 des anderen Greiferfingers 2.2 in Schließrichtung (Pfeil P1) des Greifers 1 von der anderen Seite ausgehend an das zentrale Seilzugbetätigungsmittel 16 heranzuziehen.

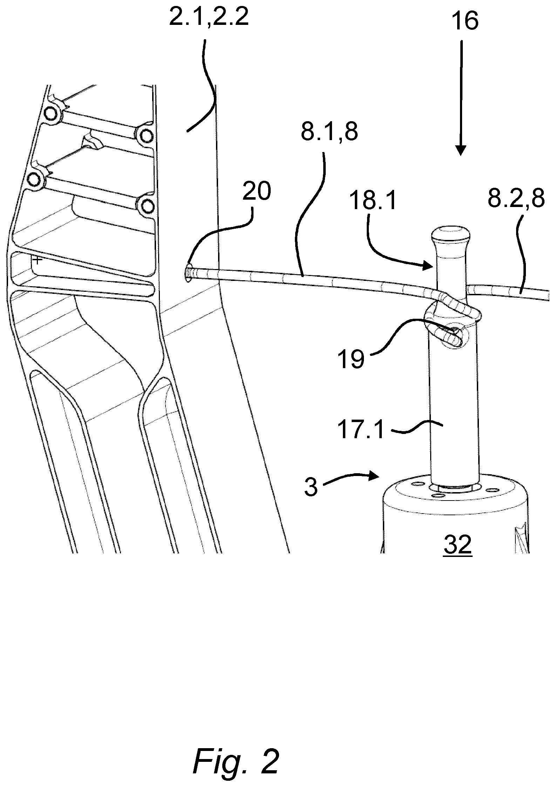

Das zentrale Seilzugbetätigungsmittel 16 gemäß Fig. 1 ist in einer vergrößerten Teilansicht nochmals deutlicher in Fig. 2 dargestellt. Das Seilzugbetätigungsmittel 16 umfasst eine Welle 17.1, die zentral zwischen der einen Greifseite des einen Greiferfingers 2.1 und der anderen Greifseite des anderen Greiferfingers 2.2 angeordnet ist und sich parallel zu den Greifseiten längserstrecken. Die Welle 17.1 ist drehbar am Greifergrundkörper 3 gelagert. Die Welle 17.1 weist eine Mantelwand 18.1 auf, die ausgebildet ist zum gleichzeitigen Aufwickeln des einen Zugmittels 8.1 des einen Greiferfingers 2.1 und des anderen Zugmittel 8.2 des anderen Greiferfingers 2.2, wenn sich die Welle 17.1 in einer Aufwickelrichtung (Pfeil P2, Fig. 1) dreht.

Die Mantelwand 18.1 ist im Falle das vorliegenden Ausführungsbeispiels tailliert ausgebildet.

Das Seilzugbetätigungsmittel 16, d.h. im Falle das vorliegenden Ausführungsbeispiels die drehbar am Greifergrundkörper 3 gelagerte Welle 17.1 weist eine Wellendurchgangsbohrung 19 auf, durch welche ein Seilzug 8 in Seilzugrichtung hindurchgeführt ist, insbesondere verschiebbar hindurchgeführt ist, wobei der Seilzug 8 zur Betätigung des Paares von zwei gegenüberliegend angeordneten Greiferfingern 2.1,2.2 ausgebildet ist, indem das eine Ende des Seilzug 8 mit dem einen Greiferfinger 2.1 verbunden ist und das andere Ende des Seilzugs 8 mit dem anderen Greiferfinger 2.2 verbunden ist. Der Seilzug 8 umfasst insoweit das eine Zugmittel 8.1 des einen Greiferfingers 2.1 und das andere Zugmittel 8.2 des anderen Greiferfingers 2.2. Das eine Zugmittel 8.1 des einen Greiferfingers 2.1 und das andere Zugmittel 8.2 des anderen Greiferfingers 2.2 können demgemäß durch einen einzigen Seilzug 8 gebildet werden.

Aufgrund der Wellendurchgangsbohrung 19, durch welche der Seilzug 8 lose hindurchgeführt ist (Fig. 1) und aufgrund der an Anlenkungsstellen 20 festgelegten Enden der Zugmittel 8.1, 8.2 werden die beiden Zugmittel 8.1, 8.2 auf der Mantelwand 18.1 der Welle 17.1 aufgewickelt und insoweit die Zugmittel 8.1, 8.2 verkürzt und die beiden Greiferfinger 2.1, 2.2 in Pfeilrichtung P1 (Fig. 1) aufeinander zu bewegt und somit der Greifer 1 geschlossen.

Wenn die Greiferfinger 2.1, 2.2 vollständig geöffnet sind, kann vorgesehen sein, dass der Seilzug 8 gestreckt durch die Wellendurchgangsbohrung 19 läuft, ohne dass der Seilzug 8 in dieser vollständig geöffneten Stellung der Greiferfinger 2.1, 2.2 die Mantelwand 18.1 der Welle 17.1 umwickelt. In diesem Zustand kann sich der Seilzug 8 dann relativ zur Welle 17.1 wieder selbsttätig mittig ausrichten, falls unerwünschte Nebeneffekte, beispielsweise aufgrund unsymmetrisch wirkender Reibungseffekte, dazu führten, dass die beiden Greiferfinger 2.1, 2.2 unterschiedlich betätigt wurden, d.h. die beiden Zugmittel 8.1, 8.2 unterschiedlich aufgewickelt wurden.

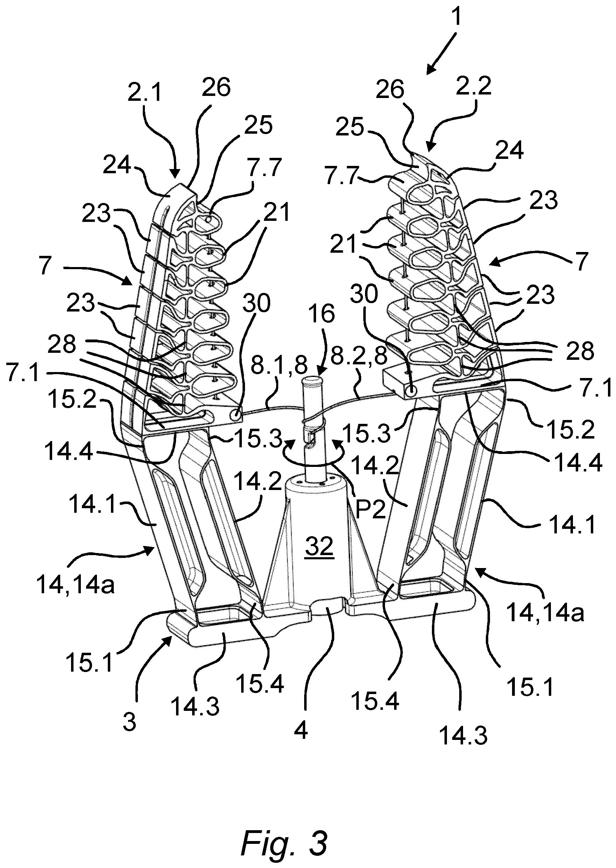

In der Fig. 3 ist eine beispielhafte zweite Ausführungsform eines Greifers 1 dargestellt.

Der Greifer 1 gemäß dieser zweiten Ausführungsform weist auch einen Greifergrundkörper 3 und ein Paar, d.h. zwei Greiferfinger 2.1, 2.2 auf, die an dem Greifergrundkörper 3 jeweils verstellbar gelagert sind.

Die wenigstens zwei Greiferfinger 2.1, 2.2 sind in dieser zweiten Ausführungsform jedoch anders ausgebildet als in der ersten Ausführungsform und zwar jeweils mit einer kinematischen Kette von mehreren aufeinander folgenden, gegeneinander verstellbar gelagerten Fingergliedern 7, von denen jeweils ein in der kinematischen Kette distales Fingerglied 7.7 ein Fingerspitzenglied bildet, wobei jeweils wenigstens ein Zugmittel 8.1, 8.2 sich entlang der kinematischen Kette der jeweiligen Fingerglieder 7 längserstreckt, und das jeweilige Zugmittel 8.1, 8.2 mit dem jeweiligen Fingerspitzenglied 7.7 verbunden ist, so dass bei Einleiten einer Zugkraft in das jeweilige Zugmittel 8.1, 8.2 der entsprechende Greiferfinger 2.1, 2.2 eine Schließbewegung ausführt und die Zugkraft ein Krümmen der kinematischen Kette der Fingerglieder 7 bewirkt.

In dieser Ausführung sind die mehreren aufeinander folgenden, gegeneinander verstellbar gelagerten Fingerglieder 7 als ein einteiliger Greiferfingerkörper ausgebildet, wobei jeweils zwei benachbarte Fingerglieder 7 über einen filmscharnierartigen Steg 28 verbunden sind und die mehreren Stege 28 eine sich innerhalb des Greiferfingers 2.1, 2.2 längserstreckende Stützsäule des Greiferfingers 2.1, 2.2 bilden.

Jedes Fingerglied 7, mit Ausnahme des Fingerwurzelglieds 7.1, weist einen vorzugsweise elastischen Hohlkörper 21 auf, der jeweils einen Tastkörper bildet, mit dem der Greiferfinger 2.1, 2.2 an einem zu greifenden Objekt berührend anliegt. Der jeweilige Hohlkörper 21 kann hohlzylindrisch ausgebildet sein, wobei die Zylinderachsen sich jeweils parallel erstrecken.

Jeder Hohlkörper 21 weist Löcher 22 auf, durch welche jeweils eines der Zugmittel 8.1, 8.2 hindurchgefädelt ist. Somit liegen in einem montierten Zustand die ersten Zugmittel 8.1, 8.2 jeweils innerhalb der Kontur der jeweiligen Fingerglieder 7 bzw. innerhalb der Kontur der Hohlkörper 21. Die Hohlkörper 21 erstrecken sich ausgehend von der neutralen Faser, die durch die filmscharnierartigen Stege 28 definiert wird, in Richtung des zu greifenden Objekts hin und zwar mit solchen Querschnittskonturen, dass sich die Hohlkörper 21 zum zu greifenden Objekt hin verjüngen. In Folge werden in einem gestreckten Zustand des Greiferfingers 1 zwischen jeweils zwei benachbarten Hohlkörpern 21 Zwischenräume geschaffen, die es ermöglichen, dass sich der Greiferfinger 1 krümmen kann.

Gegenüberliegend der Hohlkörper 21 sind auf der anderen Seite der neutralen Faser bzw. der Stege 28 rückseitige Stützkörper 23 angeformt, welche sich in dem gestreckten Zustand des Greiferfingers 2.1, 2.2 aufeinander abstützen. Dazu weisen die Stützkörper 23 außenseitig flächige, druckstabile Stützwandabschnitte auf, welche in dem gestreckten Zustand des Greiferfingers 2.1, 2.2 stirnseitig aneinander stoßen. Die flächigen, druckstabilen Stützwandabschnitte bilden zusammen mit den filmscharnierartigen Stegen 28, welche die Stützsäule des Greiferfingers 2.1, 2.2 bilden, einen in Öffnungsrichtung biegesteifen Kastenrahmen.

Am jeweiligen oberen Ende jedes Greiferfingers 2.1, 2.2 ist an dem jeweiligen Fingerspitzenglied 7.7 ein Pinzettengriffvorsprung 24 angeformt. Der Pinzettengriffvorsprung 24 weist im Falle des dargestellten Ausführungsbeispiels eine innenseitige Kehle 25 auf, die ausgebildet ist zum Greifen von stabförmigen Gegenständen an deren Mantelwand, und eine Greifkante 26 auf, die ausgebildet ist, den Pinzettengriff durchzuführen.

Auch in der zweiten Ausführungsform erfolgt die verstellbare Lagerung der zwei Greiferfinger 2.1, 2.2 an dem Greifergrundkörper 3 jeweils mittels eines Parallelogramm-Viergelenks 14. Das Parallelogramm-Viergelenk 14 umfasst zwei parallel zueinander angeordnete lange Stäbe 14.1, 14.2 und zwei parallel zueinander angeordnete kurze Stäbe 14.3, 14.4, die jeweils durch ein Drehgelenk bzw. ein Schwenkgelenk 15.1, 15.2, 15.3, 15.4 verbunden sind. Im Falle des vorliegenden Ausführungsbeispiels sind die Stäbe 14.1, 14.2, 14.3, 14.4 und die Schwenkgelenke 15.1, 15.2, 15.3, 15.4 als ein einteiliges Formteil ausgebildet.

Der Greifer 1 weist auch im Falle des zweiten Ausführungsbeispiels einen am Greifergrundkörper 3 angeordneten Antriebsmotor 4 auf, der ausgebildet ist zum Bewegen der wenigstens zwei Greiferfinger 2.1, 2.2, wobei die wenigstens zwei Greiferfinger 2.1, 2.2 jeweils mittels der Zugmittel 8.1, 8.2 bewegt werden. In das jeweilige Zugmittel 8.1, 8.2 kann eine Zugkraft durch den Antriebsmotor 4 eingeleitet werden, um den Greifer 1 durch Bewegen der wenigstens zwei Greiferfinger 2.1, 2.2 wahlweise zu öffnen oder zu schließen.

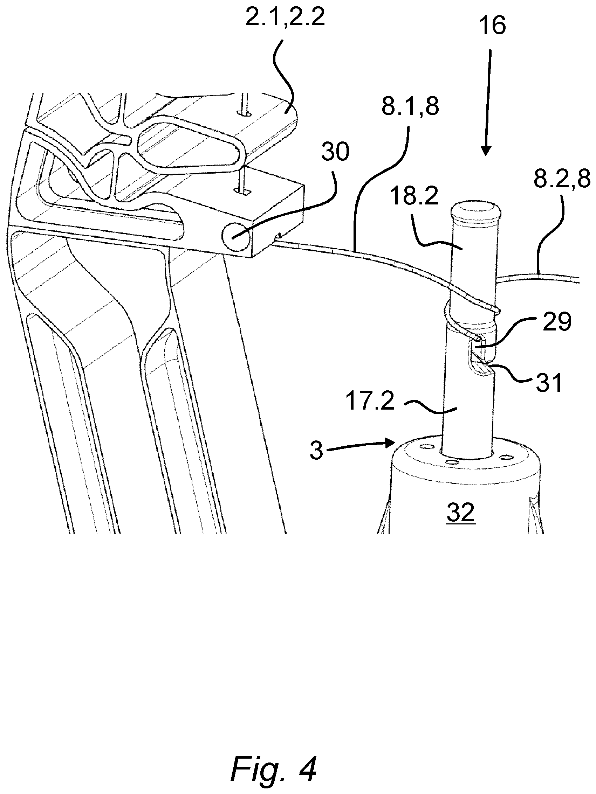

Der Greifer 1 weist eine abgewandelte Ausführungsvariante eines erfindungsgemäßen zentralen Seilzugbetätigungsmittels 16 auf. Dieses abgewandelte Seilzugbetätigungsmittel 16 ist in Fig. 4 in einer vergrößerten Teilansicht nochmals deutlicher gezeigt. Es ist jedoch darauf hingewiesen, dass ein Greifer 1 mit Greiferfingern 2.1, 2.2 gemäß der zweiten Ausführungsform nach Fig. 3 statt eines Seilzugbetätigungsmittels 16 gemäß Fig. 4 alternativ auch ein Seilzugbetätigungsmittels 16 gemäß Fig. 2 aufweisen kann. In gleicher Weise kann auch ein Greifer 1 mit Greiferfingern 2.1, 2.2 gemäß der ersten Ausführungsform nach Fig. 1 statt eines Seilzugbetätigungsmittels 16 gemäß Fig. 2 alternativ auch ein Seilzugbetätigungsmittels 16 gemäß Fig. 4 aufweisen.

Das Seilzugbetätigungsmittel 16 ist jedoch auch hier zwischen den wenigstens zwei Greiferfingern 2.1, 2.2 angeordnet und ist ausgebildet, durch eine Antriebsbewegung des am Greifergrundkörper 3 angeordneten Antriebsmotors 4 die beiden Zugmittel 8.1, 8.2 der beiden Greiferfinger 2.1, 2.2 in Schließrichtung des Greifers 1 von einer Seite ausgehend an das zentrale Seilzugbetätigungsmittel 16 heranzuziehen.

Das zentrale Seilzugbetätigungsmittel 16 gemäß Fig. 3 ist in einer vergrößerten Teilansicht nochmals deutlicher in Fig. 4 dargestellt. Das Seilzugbetätigungsmittel 16 umfasst eine Welle 17.2, die zentral zwischen der einen Greifseite des einen Greiferfingers 2.1 und der anderen Greifseite des anderen Greiferfingers 2.2 angeordnet ist und sich parallel zu den Greifseiten längserstrecken. Die Welle 17.2 ist drehbar am Greifergrundkörper 3 gelagert. Die Welle 17.2 weist eine Mantelwand 18.2 auf, die ausgebildet ist zum gleichzeitigen Aufwickeln des einen Zugmittels 8.1 des einen Greiferfingers 2.1 und des anderen Zugmittel 8.2 des anderen Greiferfingers 2.2, wenn sich die Welle 17.2 in einer Aufwickelrichtung dreht.

Die Mantelwand 18.2 ist im Falle das vorliegenden Ausführungsbeispiels tailliert ausgebildet.

Das Seilzugbetätigungsmittel 16, d.h. im Falle das vorliegenden zweiten Ausführungsbeispiels die drehbar am Greifergrundkörper 3 gelagerte Welle 17.2, weist eine abgewandelte Art einer Wellendurchgangsbohrung 29 auf, durch welche der Seilzug 8 in Seilzugrichtung hindurchgeführt ist, insbesondere verschiebbar hindurchgeführt ist, wobei der Seilzug 8 zur Betätigung des Paares der zwei gegenüberliegend angeordneten Greiferfinger 2.1, 2.2 ausgebildet ist, indem das eine Ende des Seilzug 8 mit dem einen Greiferfinger 2.1 verbunden ist und das andere Ende des Seilzugs 8 mit dem anderen Greiferfinger 2.2 verbunden ist. Der Seilzug 8 umfasst insoweit das eine Zugmittel 8.1 des einen Greiferfingers 2.1 und das andere Zugmittel 8.2 des anderen Greiferfingers 2.2. Das eine Zugmittel 8.1 des einen Greiferfingers 2.1 und das andere Zugmittel 8.2 des anderen Greiferfingers 2.2 können demgemäß durch einen einzigen Seilzug 8 gebildet werden. Das jeweilige Zugmittel 8.1, 8.2 dient in der zweiten Ausführungsform gemäß Fig. 3 und Fig. 4 nicht nur dazu, die beiden Greiferfinger 2.1, 2.2 zum Schließen des Greifers 1 gegeneinander zu bewegen, sondern dient auch dazu, den jeweiligen Greiferfinger 2.1, 2.2 zu krümmen, indem das jeweilige Zugmittel 8.1, 8.2 an zugeordneten Umlenkmitteln 30 je Greiferfinger 2.1, 2.2, wie beispielsweise Umlenkstäben oder Umlenkrollen, um 90 Grad umgelenkt werden und entlang der Längserstreckung der Greiferfinger 2.1, 2.2 bis zu dem jeweiligen Fingerspitzenglied 7.7 geführt und erst dort festgelegt ist.

Aufgrund der Wellendurchgangsbohrung 29, durch welche der Seilzug 8 lose hindurchgeführt ist (Fig. 3) und aufgrund der an den Fingerspitzengliedern 7.7 festgelegten Enden der Zugmittel 8.1, 8.2 werden die beiden Zugmittel 8.1, 8.2 auf der Mantelwand 18.2 der Welle 17.2 aufgewickelt und insoweit die Zugmittel 8.1, 8.2 verkürzt und die beiden Greiferfinger 2.1, 2.2 sowohl aufeinander zu bewegt und somit der Greifer 1 geschlossen, als auch die Greiferfinger 2.1, 2.2 gekrümmt, indem das Zugmittel 8.1, 8.2 über das Umlenkmittel 30 hinweggeführt an dem jeweiligen Fingerspitzenglied 7.7 zieht, so dass die Fingerglieder 7 sich verdrehen und den Greiferfinger 2.1, 2.2 krümmen.

Die Wellendurchgangsbohrung 29 gemäß der zweiten Ausführungsvariante nach Fig. 4 ist mit einer randoffenen Aussparung 31 ausgebildet, so dass ein Mittenabschnitt des Seilzugs 8 in einer radialen Zuführungsrichtung von außerhalb der Mantelwand der Welle 17.2 in die Wellendurchgangsbohrung 29 eingehängt werden kann.

Wenn die Greiferfinger 2.1, 2.2 vollständig geöffnet sind, kann auch in der zweiten Ausführungsform vorgesehen sein, dass der Seilzug 8 getreckt durch die Wellendurchgangsbohrung 29 läuft, ohne dass der Seilzug 8 in dieser vollständig geöffneten Stellung der Greiferfinger 2.1, 2.2 die Mantelwand 18.2 der Welle 17.2 umwickelt. In diesem Zustand kann sich der Seilzug 8 dann relativ zur Welle 17.2 wieder selbsttätig mittig ausrichten, falls unerwünschte Nebeneffekte, beispielsweise aufgrund unsymmetrisch wirkender Reibungseffekte, dazu führten, dass die beiden Greiferfinger 2.1, 2.2 unterschiedlich betätigt wurden, d.h. die beiden Zugmittel 8.1, 8.2 unterschiedlich aufgewickelt wurden.

Im Falle der ersten Ausführungsform von Greiferfingern 2.1, 2.2 gemäß Fig. 1 und Fig. 2 sind die Zugmittel 8.1, 8.2 an den Anlenkungsstellen 20 fest fixiert. Im Falle der zweiten Ausführungsform von Greiferfingern 2.1, 2.2 gemäß Fig. 3 und Fig. 4 werden die Anlenkungsstellen 20 von den Umlenkmitteln 30, wie beispielsweise Umlenkstäben oder Umlenkrollen, gebildet, an denen die Zugmittel 8.1, 8.2 auf ihren Laufwegen zu den Fingerspitzengliedern 7.7. um 90 Grad umgelenkt werden.

Sowohl im Falle der ersten Ausführungsform von Greiferfingern 2.1, 2.2 gemäß Fig. 1 und Fig. 2, als auch im Falle der zweiten Ausführungsform von Greiferfingern 2.1, 2.2 gemäß Fig. 3 und Fig. 4 kann das eine Zugmittel 8.1 an einer ersten Anlenkungsstelle 20 an dem einen Greiferfinger 2.1 angekoppelt sein und das andere Zugmittel 8.2 an einer zweiten Anlenkungsstelle 20 an dem anderen Greiferfinger 2.2 angekoppelt sein, derart, dass die beiden Anlenkungsstellen 20 auf gleicher Höhe liegen, und die Zugmittel 8.1, 8.2 an dem Seilzugbetätigungsmittel 16 auf einer Höhe angebunden sind, welche näher an dem Greifergrundkörper 3 liegt, als die erste Anlenkungsstelle 20 und die zweite Anlenkungsstelle 20.

Die Anbindungsstelle, an welcher die Zugmittel 8.1, 8.2 an dem Seilzugbetätigungsmittel 16 auf derselben Höhe angebunden sind, kann durch die geschlossene Wellendurchgangsbohrung 19 oder durch die randoffene Wellendurchgangsbohrung 29 gebildet werden.

Indem das eine Zugmittel 8.1 an einer ersten Anlenkungsstelle 20 an dem einen Greiferfinger 2.1 angekoppelt ist und das andere Zugmittel 8.2 an einer zweiten Anlenkungsstelle 20 an dem anderen Greiferfinger 2.2 angekoppelt ist, derart, dass die beiden Anlenkungsstellen 20 auf gleicher Höhe liegen, und die Zugmittel 8.1, 8.2 an dem Seilzugbetätigungsmittel 16 auf einer Höhe angebunden sind, welche näher an dem Greifergrundkörper 3 liegt, als die erste Anlenkungsstelle 20 und die zweite Anlenkungsstelle 20, wird zunächst bei einer beginnenden Schließbewegung des Greifers 1 sichergestellt, dass die Zugmittel 8.1, 8.2 schräg nach unten in Richtung des Zentrums des Greifers 1, also in Richtung des Seilzugbetätigungsmittels 16 ausgerichtet sind, so dass eine durch den Antriebsmotor 4 veranlasste Zugkraft, die durch die Zugmittel 8.1, 8.2 läuft, an der jeweiligen Anlenkungsstelle 20 des Greiferfingers 2.1, 2.2 eine in Richtung des Greifergrundkörpers 3 weisende Kraftkomponente aufweist. Gleichzeitig wird dadurch sichergestellt, dass die Zugmittel 8.1, 8.2 sich ausgehend von der geschlossenen Wellendurchgangsbohrung 19 oder ausgehend von der randoffenen Wellendurchgangsbohrung 29 des Seilzugbetätigungsmittels 16 in einer vom Greifergrundkörper 3 wegführenden Richtung auf die Welle 17.1 oder die Welle 17.2 aufwickelt, also in Richtung des freien Endes der Welle 17.1 oder der Welle 17.2 aufwickelt.

Sowohl im Falle der ersten Ausführungsform von Greiferfingern 2.1, 2.2 gemäß Fig. 1 und Fig. 2, als auch im Falle der zweiten Ausführungsform von Greiferfingern 2.1, 2.2 gemäß Fig. 3 und Fig. 4 kann der Antriebsmotor 4 in einer am Greifergrundkörper 3 ausgebildeten Aufnahmetasche 32 angeordnet sein, derart, dass sich im aufgenommenen Zustand des Antriebsmotors 4 in der Aufnahmetasche 32, die Motorwelle des Antriebsmotors 4 zentral entlang einer Symmetrieachse des Greifers 1 aus dem Greifergrundkörper 3 heraus in Richtung des Greifspaltes des Greifers 1 erstreckt.

Sowohl im Falle der ersten Ausführungsform von Greiferfingern 2.1, 2.2 gemäß Fig. 1 und Fig. 2, als auch im Falle der zweiten Ausführungsform von Greiferfingern 2.1, 2.2 gemäß Fig. 3 und Fig. 4 weist der Greifergrundkörper 3 eine Aufnahmetasche 32 auf, in dem der Antriebsmotor 4 angeordnet ist, und jeder der wenigstens zwei Greiferfinger 2.1, 2.2 ist dabei mittels jeweils eines Festkörper-Viergelenks 14a verstellbar an dem Greifergrundkörper 3 gelagert, derart, dass durch die von dem Antriebsmotor 4 verursachten, über das Seilzugbetätigungsmittel 16 in die Zugmittel 8.1, 8.2 eingeleiteten Zugkräfte die beiden Greiferfinger 2.1, 2.2 aufeinander zu bewegt werden, um den Greifer 1 zu schließen.

Der Greifergrundkörper 3 ist, wie in Fig. 1 bis Fig. 4 dargestellt ist, zusammen mit den wenigstens zwei Greiferfingern 2.1, 2.2, den wenigstens zwei Festkörper-Viergelenken 14a und der Aufnahmetasche 32 für den Antriebsmotor 4, als ein einteiliger Formkörper mit federelastischen Gelenkverbindungen ausgebildet.

## Patentansprüche

1. Greifer, aufweisend einen Greifergrundkörper (3), wenigstens zwei Greiferfinger (2.1, 2.2), von denen wenigstens einer an dem Greifergrundkörper (3) verstellbar gelagert ist, und einen am Greifergrundkörper (3) angeordneten Antriebsmotor (4), der ausgebildet ist zum Bewegen des wenigstens einen an dem Greifergrundkörper (3) verstellbar gelagerten Greiferfingers (2.1, 2.2), wobei jeder an dem Greifergrundkörper (3) verstellbar gelagerte Greiferfinger (2.1, 2.2) jeweils mittels wenigstens eines Zugmittels (8.1, 8.2) bewegt wird, in das eine Zugkraft durch den Antriebsmotor (4) eingeleitet wird, um den Greifer (1) durch Bewegen des wenigstens einen an dem Greifergrundkörper (3) verstellbar gelagerten Greiferfingers (2.1, 2.2) wahlweise zu öffnen oder zu schließen, **wobei** ein zentrales Seilzugbetätigungsmittel (16), das zwischen den wenigstens zwei Greiferfingern (2.1, 2.2) angeordnet ist und das ausgebildet ist, durch eine Antriebsbewegung des am Greifergrundkörper (3) angeordneten Antriebsmotors (4) das wenigstens eine Zugmittel (8.1) in Schließrichtung des Greifers (1) an das zentrale Seilzugbetätigungsmittel (16) heranzuziehen, und wobei die wenigstens zwei Greiferfinger (2.1, 2.2) jeweils eine kinematische Kette von mehreren aufeinander folgenden, gegeneinander verstellbar gelagerten Fingergliedern (7) aufweisen, von denen jeweils ein in der kinematischen Kette distales Fingerglied (7.7) ein Fingerspitzenglied bildet, wobei jeweils wenigstens ein Zugmittel (8.1, 8.2) sich entlang der kinematischen Kette der jeweiligen Fingerglieder (7) längserstreckt, und das jeweilige Zugmittel (8.1, 8.2) mit dem jeweiligen Fingerspitzenglied (7.7) verbunden ist, so dass bei Einleiten einer Zugkraft in das jeweilige Zugmittel (8.1, 8.2) der entsprechende Greiferfinger (2.1, 2.2) eine Schließbewegung ausführt und die Zugkraft ein Krümmen der kinematischen Kette der Fingerglieder (7) bewirkt, wobei der Greifergrundkörper (3) eine Aufnahmetasche (32) aufweist, in welcher der Antriebsmotor (4) angeordnet ist, **dadurch gekennzeichnet, dass** jeder der wenigstens zwei Greiferfinger (2.1, 2.2) mittels jeweils eines Festkörper-Viergelenks (14a) verstellbar an dem Greifergrundkörper (3) gelagert ist, derart, dass durch die von dem Antriebsmotor (4) verursachten, über das Seilzugbetätigungsmittel (16) in die Zugmittel (8, 8.1, 8.2) eingeleiteten Zugkräfte die beiden Greiferfinger (2.1, 2.2) aneinander angenähert, insbesondere aufeinander zu bewegt werden, um den Greifer (1) zu schließen und, **dass** der Greifergrundkörper (3) zusammen mit den wenigstens zwei Greiferfingern (2.1, 2.2), den wenigstens zwei Festkörper-Viergelenken (14a) und der Aufnahmetasche (32) für den Antriebsmotor (4), als ein einteiliger Formkörper mit federelastischen Gelenkverbindungen ausgebildet ist.

2. Greifer nach Anspruch 1, **dadurch gekennzeichnet, dass** der Greifer (1) wenigstens zwei an dem Greifergrundkörper (3) verstellbar gelagerte Greiferfinger (2.1, 2.2) aufweist und das zentrale Seilzugbetätigungsmittel (16) zwischen den wenigstens zwei an dem Greifergrundkörper (3) verstellbar gelagerten Greiferfingern (2.1, 2.2) angeordnet ist, wobei das zentrale Seilzugbetätigungsmittel (16) ausgebildet ist, durch eine Antriebsbewegung des am Greifergrundkörper (3) angeordneten Antriebsmotors (4) das wenigstens eine Zugmittel (8.1) des einen Greiferfingers (2.1) in Schließrichtung des Greifers (1) von einer Seite ausgehend an das zentrale Seilzugbetätigungsmittel (16) heranzuziehen und gleichzeitig das wenigstens eine andere Zugmittel (8.2) des anderen Greiferfingers (2.2) in Schließrichtung des Greifers (1) von der anderen Seite ausgehend an das zentrale Seilzugbetätigungsmittel (16) heranzuziehen.

3. Greifer nach einem der Ansprüche 1 bis 2, **dadurch gekennzeichnet, dass** das Seilzugbetätigungsmittel (16) eine zentral zwischen der einen Greifseite des einen Greiferfingers (2.1) und der anderen Greifseite des anderen Greiferfingers (2.2) angeordnete, sich parallel zu den Greifseiten längserstreckende, drehbar am Greifergrundkörper (3) gelagerte Welle (17.1, 17.2) umfasst, die eine Mantelwand, insbesondere eine taillierte Mantelwand mit in axialer Richtung sich änderndem Mantelwandradius, aufweist, die ausgebildet ist zum Aufwickeln wenigstens des Zugmittels (8.1) des an dem Greifergrundkörper (3) verstellbar gelagerten einen Greiferfingers (2.1) oder zum gleichzeitigen Aufwickeln der wenigstens zwei Zugmittel (8.1, 8.2) der wenigstens zwei an dem Greifergrundkörper (3) verstellbar gelagerten Greiferfinger (2.1, 2.2), wenn sich die Welle (17.1, 17.2) in einer Aufwickelrichtung dreht.

4. Greifer nach einem der Ansprüche 1 bis 3, **dadurch gekennzeichnet, dass** das Seilzugbetätigungsmittel (16), insbesondere die drehbar am Greifergrundkörper (3) gelagerte Welle (17.1, 17.2), eine Wellendurchgangsbohrung (19) aufweist, durch welche ein Seilzug (8) in Seilzugrichtung hindurchgeführt ist, insbesondere verschiebbar hindurchgeführt ist, wobei der Seilzug (8) zur Betätigung eines Paares von zwei gegenüberliegend angeordneten, an dem Greifergrundkörper (3) verstellbar gelagerten Greiferfingern (2.1, 2.2) ausgebildet ist, indem das eine Ende des Seilzug (8) mit dem einen Greiferfinger (2.1) verbunden ist und das andere Ende des Seilzugs (8) mit dem anderen Greiferfinger (2.2) verbunden ist.

5. Greifer nach Anspruch 4, **dadurch gekennzeichnet, dass** die Wellendurchgangsbohrung (29) zur Mantelwand des Seilzugbetätigungsmittels (16) oder zur Mantelwand der Welle (17.1, 17.2) mit einer randoffenen Aussparung (31) ausgebildet ist, so dass ein Mittenabschnitt des Seilzugs (8) in einer radialen Zuführungsrichtung von außerhalb der Mantelwand in die Wellendurchgangsbohrung (29) eingehängt werden kann.

6. Greifer nach einem der Ansprüche 2 bis 5, **dadurch gekennzeichnet, dass** das eine Zugmittel (8.1) an einer ersten Anlenkungsstelle (20) an dem einen Greiferfinger (2.1) angekoppelt ist und das andere Zugmittel (8.2) an einer zweiten Anlenkungsstelle (20) an dem anderen Greiferfinger (2.2) angekoppelt ist, derart, dass die beiden Anlenkungsstellen (20) auf gleicher Höhe liegen, und die Zugmittel (8.1, 8.2) an dem Seilzugbetätigungsmittel 816) auf einer Höhe angebunden sind, welche näher an dem Greifergrundkörper (3) liegt, als die erste Anlenkungsstelle (20) und die zweite Anlenkungsstelle (20).

7. Greifer nach einem der Ansprüche 1 bis 6, **dadurch gekennzeichnet, dass** der Antriebsmotor (4) in einer am Greifergrundkörper (3) ausgebildeten Aufnahmetasche (32) angeordnet ist, derart, dass sich im aufgenommenen Zustand des Antriebsmotors (4) in der Aufnahmetasche (32), die Motorwelle des Antriebsmotors (4) zentral entlang einer Symmetrieachse des Greifers (1) aus dem Greifergrundkörper (3) heraus in Richtung des Greifspaltes des Greifers (1) erstreckt.

## Claims

1. Gripper having a gripper main body (3), having at least two gripper fingers (2.1, 2.2), of which at least one is mounted adjustably on the gripper main body (3), and having a drive motor (4) which is arranged on the gripper main body (3) and which is configured for moving the at least one gripper finger (2.1, 2.2) mounted adjustably on the gripper main body (3), wherein each gripper finger (2.1, 2.2) mounted adjustably on the gripper main body (3) is moved in each case by means of at least one pulling means (8.1, 8.2), into which a pulling force is introduced by the drive motor (4) in order to selectively open or close the gripper (1) by way of movement of the at least one gripper finger (2.1, 2.2) mounted adjustably on the gripper main body (3), wherein a central cable-pull actuating means (16) arranged between the at least two gripper fingers (2.1, 2.2) and configured to draw, by way of a drive movement of the drive motor (4) arranged on the gripper main body (3), the at least one pulling means (8.1) to the central cable-pull actuating means (16) in the closing direction of the gripper (1), and wherein the at least two gripper fingers (2.1, 2.2) each have a kinematic chain of multiple successive finger members (7) which are mounted so as to be adjustable in relation to one another and of which in each case one distal finger member (7.7) in the kinematic chain forms a fingertip member, wherein in each case at least one pulling means (8.1, 8.2) extends longitudinally along the kinematic chain of the respective finger members (7), and the respective pulling means (8.1, 8.2) is connected to the respective fingertip member (7.7) such that, when a pulling force is introduced into the respective pulling means (8.1, 8.2), the corresponding gripper finger (2.1, 2.2) performs a closing movement and the pulling force causes the kinematic chain of the finger members (7) to curve, wherein the gripper main body (3) has an accommodating pocket (32) in which the drive motor (4) is arranged, **characterized in that** each of the at least two gripper fingers (2.1, 2.2) is mounted adjustably on the gripper main body (3) by means of in each case one four-bar flexure joint (14a) in such a way that, by way of the pulling forces caused by the drive motor (4) and introduced via the cable-pull actuating means (16) into the pulling means (8, 8.1, 8.2), the two gripper fingers (2.1, 2.2) are brought closer together, in particular are moved towards one another, in order to close the gripper (1), and **in that** the gripper main body (3) is formed together with the at least two gripper fingers (2.1, 2.2), the at least two four-bar flexure joints (14a) and the accommodating pocket (32) for the drive motor (4) as a one-piece shaped body with spring-elastic joint connections.

2. Gripper according to Claim 1, **characterized in that** the gripper (1) has at least two gripper fingers (2.1, 2.2) which are mounted adjustably on the gripper main body (3) and the central cable-pull actuating means (16) is arranged between the at least two gripper fingers (2.1, 2.2) mounted adjustably on the gripper main body (3), wherein the central cable-pull actuating means (16) is configured to draw, by way of a drive movement of the drive motor (4) arranged on the gripper main body (3), the at least one pulling means (8.1) of the one gripper finger (2.1) to the central cable-pull actuating means (16) from one side in the closing direction of the gripper (1) and at the same time the at least one other pulling means (8.2) of the other gripper finger (2.2) to the central cable-pull actuating means (16) from the other side in the closing direction of the gripper (1).

3. Gripper according to either of Claims 1 and 2, **characterized in that** the cable-pull actuating means (16) comprises a shaft (17.1, 17.2) which is arranged centrally between the one gripper side of the one gripper finger (2.1) and the other gripper side of the other gripper finger (2.2) and which extends longitudinally in a manner parallel to the gripper sides and which is mounted rotatably on the gripper main body (3) and which has a lateral wall, in particular a waisted lateral wall with a lateral-wall radius which varies in the axial direction, that is configured for winding at least the pulling means (8.1) of the one gripper finger (2.1) mounted adjustably on the gripper main body (3) or for simultaneously winding the at least two pulling means (8.1, 8.2) of the at least two gripper fingers (2.1, 2.2) mounted adjustably on the gripper main body (3) when the shaft (17.1, 17.2) rotates in a winding direction.

4. Gripper according to one of Claims 1 to 3, **characterized in that** the cable-pull actuating means (16), in particular the shaft (17.1, 17.2) mounted rotatably on the gripper main body (3), has a shaft passage bore (19) through which a cable pull (8) is passed, in particular is passed displaceably, in the cable pull direction, wherein the cable pull (8) is configured for actuating a pair of two oppositely arranged gripper fingers (2.1, 2.2), mounted adjustably on the gripper main body (3), **in that** the one end of the cable pull (8) is connected to the one gripper finger (2.1) and the other end of the cable pull (8) is connected to the other gripper finger (2.2).

5. Gripper according to Claim 4, **characterized in that** the shaft passage bore (29) with respect to the lateral wall of the cable-pull actuating means (16) or with respect to the lateral wall of the shaft (17.1, 17.2) is formed with a cutout (31) which is open to the edge, such that a middle portion of the cable pull (8) can be fitted into the shaft passage bore (29) from outside the lateral wall in a radial feeding direction.

6. Gripper according to one of Claims 2 to 5, **characterized in that** the one pulling means (8.1) is coupled at a first articulation point (20) to the one gripper finger (2.1), and the other pulling means (8.2) is coupled at a second articulation point (20) to the other gripper finger (2.2), in such a way that the two articulation points (20) are at the same height, and the pulling means (8.1, 8.2) are attached to the cable-pull actuating means 816) at a height which is closer to the gripper main body (3) than the first articulation point (20) and the second articulation point (20).

7. Gripper according to one of Claims 1 to 6, **characterized in that** the drive motor (4) is arranged in an accommodating pocket (32), formed on the gripper main body (3), in such a way that, in the accommodated state of the drive motor (4) in the accommodating pocket (32), the motor shaft of the drive motor (4) extends centrally along an axis of symmetry of the gripper (1) from the gripper main body (3) in the direction of the gripping gap of the gripper (1).

## Revendications

1. Préhenseur comprenant un corps de base (3), au moins deux doigts de préhension (2.1, 2.2), dont au moins un est monté de manière flexible sur le corps de base (3), et un moteur d'entraînement (4) agencé sur le corps de base (3), qui est conçu pour déplacer ledit au moins un doigt de préhension (2.1, 2.2) monté de manière flexible sur le corps de base (3) du préhenseur, chaque doigt de préhension (2.1, 2.2) monté de manière flexible sur le corps de base (3) du préhenseur étant déplacé au moyen d'au moins un moyen de traction (8.1, 8.2) dans lequel une force de traction est introduite par le moteur d'entraînement (4) afin d'ouvrir ou de fermer sélectivement le préhenseur (1) en déplaçant ledit au moins un doigt de préhenseur (2.1, 2.2) monté de manière flexible sur le corps de base (3) du préhenseur, un moyen central (16) d'actionnement de câble, qui est agencé entre lesdits au moins deux doigts de préhension (2.1, 2.2), et conçu pour tirer ledit au moins un moyen de traction (8.1) dans le sens de fermeture du préhenseur (1) vers le moyen central (16) d'actionnement de câble par un mouvement d'entraînement du moteur d'entraînement (4) agencé sur le corps de base (3) du préhenseur, et lesdits au moins deux doigts de préhension (2.1, 2.2) comprenant chacun une chaîne cinématique de plusieurs éléments de doigt (7) successifs, montés de manière flexible les uns par rapport aux autres, dont un élément de doigt (7.7), distal dans la chaîne cinématique, forme un élément de pointe de doigt, au moins un moyen de traction (8.1, 8.2) s'étendant le long de la chaîne cinématique des éléments de doigt respectifs (7), et le moyen de traction respectif (8.1, 8.2) étant relié à l'élément de pointe de doigt (7.7) respectif, de sorte que, lorsqu'une force de traction est appliquée dans le moyen de traction respectif (8.1, 8.2), le doigt de préhension correspondant (2.1, 2.2) effectue un mouvement de fermeture et que la force de traction provoque une courbure de la chaîne cinématique des éléments de doigt (7), le corps de base (3) du préhenseur comprenant une poche de réception (32) dans laquelle est agencé le moteur d'entraînement (4), **caractérisé en ce que** chacun desdits au moins deux doigts de préhension (2.1, 2.2) est monté de manière flexible sur le corps de base (3) du préhenseur au moyen d'une articulation quadruple à corps fixe (14a), de telle sorte que les forces de traction induites dans les moyens de traction (8, 8.1, 8.2) par le moteur d'entraînement (4), par l'intermédiaire du moyen (16) d'actionnement de câble, rapprochent les deux doigts de préhension (2.1, 2.2) l'un de l'autre, en particulier les déplacent l'un vers l'autre, afin de fermer le préhenseur (1), et **en ce que** le corps de base (3) du préhenseur est réalisé, avec lesdits au moins deux doigts de préhension (2.1, 2.2), lesdites au moins deux articulations quadruple à corps fixe (14a) et la poche de réception (32) pour le moteur d'entraînement (4), sous la forme d'un corps moulé en une seule pièce ayant des liaisons articulées élastiques.

2. Préhenseur selon la revendication 1, caractérisé en que le préhenseur (1) comprend au moins deux doigts de préhension (2.1, 2.2) montés de manière flexible sur le corps de base (3) du préhenseur, et en ce que le moyen central (16) d'actionnement de câble est agencé entre lesdits au moins deux doigts de préhension (2.1, 2.2) montés de manière flexible sur le corps de base (3) du préhenseur, le moyen central (16) d'actionnement de câble étant conçu de manière à, par un mouvement d'entraînement du moteur d'entraînement (4) agencé sur le corps de base (3) du préhenseur, tirer ledit au moins un moyen de traction (8.1) de l'un des doigts de préhension (2.1) dans le sens de fermeture du préhenseur (1) à partir d'un côté vers le moyen central (16) d'actionnement de câble et tirer simultanément, à partir de l'autre côté, vers le moyen central (16) d'actionnement de câble, ledit au moins un autre moyen de traction (8.2) de l'autre doigt de préhension (2.2) dans le sens de la fermeture du préhenseur (1).

3. Préhenseur selon l'une des revendications 1 à 2, **caractérisé en ce que** le moyen (16) d'actionnement de câble comprend un arbre (17.1, 17.2) agencé centralement entre le côté préhension dudit un des doigts de préhension (2.1) et l'autre côté de préhension de l'autre doigt de préhension (2.2), monté de manière rotative sur le corps de base (3) du préhenseur, s'étendant longitudinalement parallèlement aux côtés de préhension, qui comprend une paroi d'enveloppe, en particulier une paroi d'enveloppe cintrée avec un rayon de paroi d'enveloppe variant dans la direction axiale, qui est conçue pour enrouler ledit moyen de traction (8.1) d'un doigt de préhension (2.1) monté de manière flexible sur le corps de base (3) du préhenseur, ou pour enrouler simultanément lesdits au moins deux moyens de traction (8.1, 8.2) desdits au moins deux doigts de préhension (2.1, 2.2) montés de manière flexible sur le corps de base (3) du préhenseur, lorsque l'arbre (17.1, 17.2) tourne dans un sens d'enroulement.

4. Préhenseur selon l'une des revendications 1 à 3, **caractérisé en ce que** le moyen (16) d'actionnement de câble, en particulier l'arbre (17.1, 17.2) monté de manière rotative sur le corps de base (3) du préhenseur, comprend un alésage traversant (19) à travers lequel un câble (8) est guidé dans la direction de traction du câble, en particulier de manière coulissante, le câble (8) étant conçu pour actionner une paire de deux doigts de préhension (2.1, 2.2) agencés en vis-à-vis et montés de manière flexible sur le corps de base (3) du préhenseur, l'une des extrémités du câble de traction (8) étant reliée à l'un des doigts de préhension (2.1) et l'autre extrémité du câble de traction (8) étant reliée à l'autre doigt de préhension (2.2).

5. Préhenseur selon la revendication 4, **caractérisé en ce que** l'alésage (29) de passage de l'arbre est formé avec un évidement à bords ouverts (31) vers la paroi d'enveloppe du moyen (16) d'actionnement de câble ou vers la paroi d'enveloppe de l'arbre (17.1, 17.2), de sorte qu'une partie centrale du câble (8) est apte à être accrochée dans l'alésage (29) de passage de l'arbre, dans une direction radiale d'amenée depuis l'extérieur de la paroi d'enveloppe.

6. Préhenseur selon l'une des revendications 2 à 5, **caractérisé en ce que** ledit un des moyens de traction (8.1) est relié à un premier point d'articulation (20) sur ledit un des doigts de préhension (2.1), et ledit autre moyen de traction (8.2) est relié à un deuxième point d'articulation (20) sur ledit autre doigt de préhension (2.2), de telle sorte que les deux points d'articulation (20) se trouvent à la même hauteur et que les moyens de traction (8.1, 8.2) soient reliés au moyen d'actionnement à câble 816) à une hauteur qui est plus proche du corps de base (3) de préhenseur que le premier point d'articulation (20) et le deuxième point d'articulation (20).

7. Préhenseur selon l'une des revendications 1 à 6, **caractérisé en ce que** le moteur d'entraînement (4) est agencé dans une poche de réception (32) formée sur le corps de base (3) du préhenseur, de telle sorte que, lorsque le moteur d'entraînement (4) est reçu dans la poche de réception (32), l'arbre du moteur d'entraînement (4) s'étend de manière centrale le long d'un axe de symétrie du préhenseur (1) hors du corps de base (3) du préhenseur, en direction de la fente de préhension du préhenseur (1).
